# EUROPÄISCHE PATENTANMELDUNG

(11) **EP 1 065 557 A2**
(43) Veröffentlichungstag der Anmeldung: **03.01.2001**
(21) Anmeldenummer: 00110314.2
(22) Anmeldetag: 13.05.2000
(51) Int. Cl.: G02F 1/163

(54) **Verfahren zur Regelung der Lichtdurchlässigkeit eines elektrochromen Glases**

(30) Priorität: 02.06.1999 DE 19925335
(71) Anmelder: EADS Airbus GmbH, 21129 Hamburg (DE)
(72) Erfinder: Brüchmann, Gerd, 21244 Buchholz (DE); Hützen, Ulrich, 23611 Sereetz (DE); Wiese, Christian, 27404 Heeslingen (DE)
(74) Vertreter: Hansmann, Dierk, Dipl.-Ing.

(57) **Zusammenfassung**

Verfahren zur Regelung der Lichtdurchlässigkeit eines elektrochromen Glases, insbesondere für Cockpit- oder Kabinenscheiben eines Flugzeuges, Sonnendächer bzw. Rundumverglasungen eines Autos oderdergleichen. Verwendet wird eine Schaltungsanordnung zur Erzeugung einer, in Abhängigkeit von der gewünschten Lichtdurchlässigkeit an das elektrochrome Glas anzulegenden elektrischen Spannung.

Eine Optimierung der dem elektrochromen Glas zuzuführenden elektrischen Energie hinsichtlich Größe und Zeitdauer wird durch folgende Verfahrensschritte erreicht:
- der an dem Glas anliegende Spannungs-Istwert wird meßtechnisch ermittelt und mit einem Spannungs-Sollwert verglichen, der durch die gewünschte Lichtdurchlässigkeit vorgegeben und der zur Erzeugung des Regelstromes an das Glas anzulegen ist,
- in Abhängigkeit von einem durch den Spannungsvergleich ermittelten Differenzwert wird eine elektrische Spannung positiver oder negativer Polarität Zeitdauer an das elektrochrome Glas angelegt, bis der Spannungs-Sollwert erreicht ist,
- nach Erreichung des Spannungs-Sollwertes wird die an das Glas angelegte elektrische Spannung abgeschaltet bzw. derart verringert, daß kein Regelungsstrom fließt, und
- nach jeder Abweichung des an dem Glas anliegenden Spannungs-Istwertes um einen vorgegebenen Schwellwert wird die elektrische Spannung jeweils erneut für eine vorgegebene Zeitdauer und mit der entsprechenden Polarität an das Glas bis zum Erreichen des Spannungs-Sollwertes angelegt.

## Beschreibung

Die Erfindung betrifft ein Verfahren zur Regelung der Lichtdurchlässigkeit eines elektrochromen Glases, insbesondere für Cockpit- oder Kabinenscheiben eines Flugzeuges, Sonnendächer bzw. Rundumverglasungen eines Autos oderdergleichen, unter Verwendung einer Schaltungsanordnung zur Erzeugung einer, in Abhängigkeit von der gewünschten Lichtdurchlässigkeit an das elektrochrome Glas anzulegenden elektrischen Spannung für eine vorgegebene Zeitdauer und zur Regelung des in das elektrochrome Glas fließenden Stromes, wobei ein Spannungs-Sollwert ermittelt wird, der durch die gewünschte Lichtdurchlässigkeit vorgegeben ist, sowie eine Schaltungsanordnung zur Durchführung des Verfahrens.

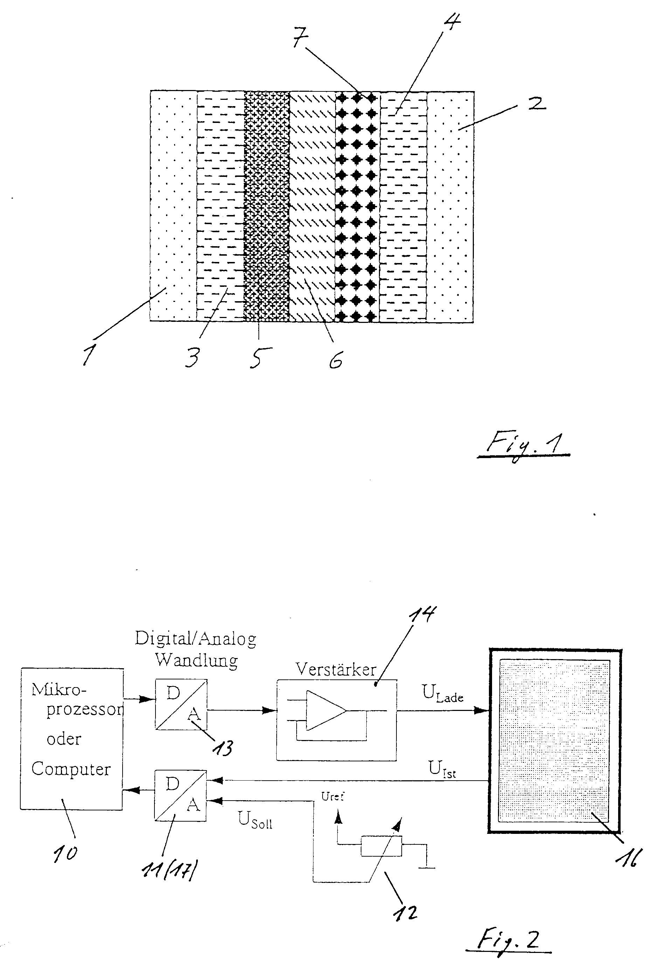

Wie aus Fig. 1 zu entnehmen ist, versteht man unter einem elektrochromen Glas zwei herkömmliche Glasscheiben 1 und 2, zwischen denen jeweils eine transparente Elektrode 3 bzw. 4 in unmittelbarer Nähe der Glasscheiben 1, 2 angeordnet ist. Hierbei liegt eine färbende Schicht 5, vorzugsweise eine Wolframoxidschicht, direkt an einer transparenten Elektrode 3 an. Zwischen der färbenden Schicht 5 und der anderen transparenten Elektrode 4 befinden sich ein Elektrolyt 6 sowie eine Ionenspeicherschicht 7. Um eine Änderung der Lichtdurchlässigkeit eines derartig aufgebauten elektrochromen Glases zu erreichen, müssen die verwendeten Materialien auf ein definiertes elektrisches Potential aufgeladen werden. Der erforderliche Spannungswert ist von den verwendeten Materialien abhängig. Liegt zwischen beiden Elektroden 3, 4 eine kleine Spannung, so fließt ein Ionenstrom in die Wolframoxid-Schicht. Elektronen kompensieren die Ladung der Ionen. Die ursprünglich transparente Wolframoxid-Schicht wird durch die eingelagerten Ionen blau und somit die Lichtdurchlässigkeit reduziert. Der Effekt kann durch einen Kurzschluß oder eine angelegte Spannung entgegengesetzter Polarität rückgängig gemacht werden.

Aus der DE 196 30 812 A1 ist ein transparentes Abdecksystem für einen Fahrzeug-Innenraum bekannt, bei dem zur Freigabe einer Öffnung wenigstens eine transparente Scheibe über oder unter eine andere Scheibe verschiebbar ist. Um gleichzeitig eine gute Abschattungswirkung bei geschlossenem Fahrzeuginnenraum und eine gute Durchsicht bei übereinandergeschobenen Scheiben zu erreichen, ist vorgesehen, daß eine der übereinander verschiebbaren Scheiben durch eine elektrochrome Beschichtung in ihrer Transparenz variabel ist. Die Transparenz der mit einer elektrochromen Beschichtung versehenen Scheibe kann beispielsweise mittels eines Potentiometers verändert werden. Wird z. B. durch einen veränderlichen Widerstand an den elektrochromen Beschichtungen eine reduzierte Spannung angelegt, so wird eine erhöhte Transparenz der Scheibe bewirkt. Eine Verringerung der Transparenz wird durch Anlegen einer erhöhten Spannung erreicht, die nachteiligerweise ununterbrochen aufrechterhalten werden muß.

In der US-PS 5,384,578 ist ein variierbares elektrochromes Lichttransmissions-System beschrieben, bei dem die Lichtdurchlässigkeit einer Glasscheibe in Abhängigkeit von einer durch die Eigenschaften der Glassscheibe vorgegebenen Zeitkonstanten und einer Sollwertvorgabe einstellbar ist. Es wird kein Lichtdurchlässigkeits-Istwert ermittelt, sondern die Zeitkonstante und Sollwertvorgabe steuern einen Multivibrator mit einem Triggersignal an. Der Multivibrator erzeugt ein gepulstes Signal zur Aufladung der Glasscheibe.

Der Erfindung liegt nun die Aufgabe zugrunde, ein Verfahren der eingangs genannten Art zu schaffen, mit dem eine Optimierung der dem elektrochromen Glas zuzuführenden elektrischen Energie hinsichtlich Größe und Zeitdauer erreicht wird.

Die Aufgabe wird erfindungsgemäß durch die folgenden Verfahrensschritte gelöst:
- der an dem Glas anliegende Spannungs-Istwert wird meßtechnisch ermittelt und mit einem Spannungs-Sollwert verglichen,
- in Abhängigkeit von einem durch den Spannungsvergleich ermittelten Differenzwert wird eine elektrische Spannung positiver oder negativer Polarität zur Erzeugung des Regelstromes an das elektrochrome Glas angelegt, bis der Spannungs-Sollwert erreicht ist,
- nach Erreichung des Spannungs-Sollwertes wird die an das Glas angelegte elektrische Spannung abgeschaltet bzw. derart verringert, daß kein Regelungsstrom fließt, und
- nach jeder Abweichung des an dem Glas anliegenden Spannungs-Istwertes um einen vorgegebenen Schwellwert wird die elektrische Spannung jeweils erneut mit der entsprechenden Polarität an das Glas bis zum Erreichen des Spannungs-Sollwertes angelegt.

Ein wesentlicher Vorteil der Erfindung liegt darin, daß die Zeitdauer für die Meßintervalle und Ladeintervalle sowie die Spannungs-Sollwerte - gegebenfalls mit einer definierten Strombegrenzung - in Abhängigkeit von dem Aufbau, Material und Größe des elektrochromen Glases stehen und somit an das elektrochrome Glas anpaßbar sind. Ein weiterer Vorteil der Erfindung ist darin zu sehen, daß die Regelungselektronik als integrierter Teil des elektrochromen Glases oder auch als separate Einheit verwendet werden kann, wobei die Spannungsversorgung der Regelungselektronik - abhängig vom Anwendungsfall - durch das Bordnetz eines Flugzeuges oder die Batterie eines Kraftfahrzeuges erfolgen kann.

Ausgestaltungen der Erfindung bestehen darin, daß
- Regelungsparameter wie Meßintervalle, Spannungsladezeitdauer und/oder Spannungs-Sollwerte während der Regelungsvorgänge variierbar sind,
- die Regelung mit diskreten elektronischen Komponenten über Schwellwertabfragen und Komparatoren durchgeführt wird, und daß
- die Regelung mit einem, ein Analog-Digital-gewandeltes-Signal verarbeitenden Mikrocontroller / Mikroprozessor durchgeführt wird.

Eine weitere erfindungsgemäße Ausgestaltung kann dahin gehen, daß anstelle der Steuerung des Ladevorganges über die angelegte Spannung und Zeitdauer es durch eine Messung des in das Glas fließenden Stromes möglich ist, die Aufladung und damit die Lichtdurchlässigkeit zu steuern.

Eine erfindungsgemäße Schaltungsanordnung zur Durchführung des Verfahrens ist im Unteranspruch 5 beschrieben. Erfindungsgemäße Weiterbildungen dieser Schaltungsanordnung sind aus den Unteransprüchen 6 bis 8 ersichtlich.

In der Zeichnung ist ein Ausführungsbeispiel nach der Erfindung dargestellt, und zwar zeigt:
- Fig. 1:: ein elektrochromes Glas nach dem Stand der Technik, welches bereits in der Beschreibungseinleitung beschrieben ist;
- Fig. 2:: ein Blockschaltbild einer Schaltungsanordnung zur Durchführung des erfindungsgemäßen Verfahrens; und
- Fig. 3:: eine Schaltungsanordnung, die die Details des Blockschaltbildes gemäß Fig. 2 aufweist.

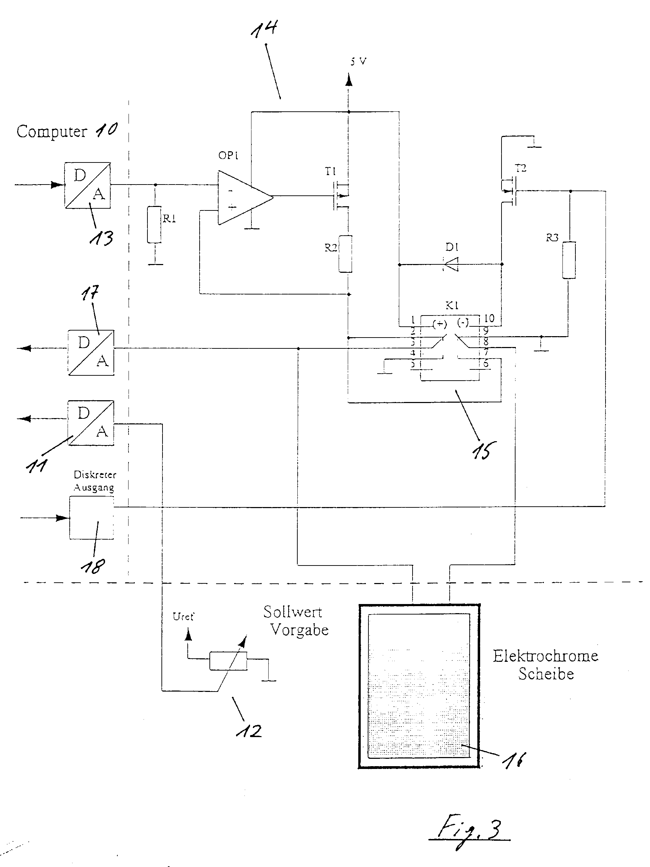

Wie aus den Figuren 2 und 3 zu ersehen ist, besteht die Schaltungsanordnung zur Regelung der Lichtdurchlässigkeit eines elektrochromen Glases 16 aus zwei wesentlichen Komponenten:
Erstens aus einem Leistungs-Spannungsfolger 14, der im Prinzip eine präzise geregelte Spannungsquelle darstellt, beispielsweise für eine Leistung von etwa 5 Watt ausgelegt ist, und der einen Operationsverstärker OP, einen MOSFET T1 und einen Strombegrenzungswiderstand R2 aufweist. Eine Steuerspannung sehr kleiner Leistung von z. B. 0 bis 2 Volt wird von dem Mikroprozessor oder Rechner 10 in den negativen Eingang des Operationsverstärkers OP eingespeist. Die Spannungsfolgerschaltung 14 ist nun stets bestrebt, den positiven Eingang des Operationsverstärkers OP auf das gleiche Potential zu bringen wie den negativen Eingang. So folgt die Spannung des Ausganges (verbunden mit dem positiven Eingang des Operationsverstärkers OP) derjenigen des Einganges (negativer Eingang des Operationsverstärkers OP). Wird der Ausgang belastet, beispielsweise durch den Ladestrom für das elektrochrome Glas 16, so hält der Operationsverstärker OP über den MOSFET T1 die Spannung an dem Glas 16 konstant; der Operationsverstärker OP regelt die Spannung.
Zweitens aus einer Umpoleinrichtung 15, die aus einem Relais K1, einem MOSFET T2 und einer Diode D1 besteht und mit deren Hilfe der Leistungs-Spannungsfolger 14 das elektrochrome Glas 16 in beiden Polaritäten ansteuert und somit "Laden" oder "Entladen" kann. Der MOSFET T2 wird digital von dem Mikroprozessor oder Rechner 10 angesteuert und kennt lediglieb die Zustände "ein" oder "aus". Der MOSFET T2 schaltet so die beiden Schaltzustände des Relais K1, also "Aufladung" oder "Entladung" des Glases 16. Die Diode D1 schützt den MOSFET T2 vor Spannungsspitzen der Relaisspulen-Induktivitäten bei den Umschaltvorgängen.

Bei der Schaltungsanordnung können folgende drei Zustände vorliegen:
- Elektrochromes Glas 16 aufladen (abdunkeln); Relais K1 in Ruhezustand; Gate des MOSFET T2 = 0 Volt; Eingangsspannung des Spannungsfolgers 14 (D/A-Kanal 0/1) im Bereich von ca. 0 bis 2 Volt.
- Elektrochromes Glas 16 entladen (aufhellen); Relais K1 in geschaltetem Zustand; Gate des MOSFET T2 = 5 Volt; Eingangsspannung des Spannungsfolgers 14 (D/A-Kanal 0/1) im Bereich von ca. 0 bis 1 Volt.
- Messung der Spannung des elektrochromens Glas 16 (Meßphase ist nur ohne Lade- oder Entladestrom möglich); Relaiszustand ist Ruhezustand; Eingangsspannung des Spannungsfolgers 14 (D/A-Kanal 0/1) = 0 Volt.

Das Regelverhalten läßt sich im Falle einer Aufladung des elektrochromes Glases 16 wie folgt beschreiben. Es wird hier von dem Grundzustand des Glases 16 "durchsichtig" ausgegangen, also "Entladung" des Glases 16. Ein Benutzer möchte das Glas 16 auf einen bestimmten Wert abdunkeln und stellt das Regelpotentiometer der Sollwertvorgabe 12 entsprechend ein. Der Rechner 10 mißt am Abgriff des Potentiometers den eingestellten Wert und benutzt diesen als Referenz für den Endwert der Glasspannung. Der Rechner 10 beginnt nun, das Glas 16 mit der maximal zulässigen Spannung aufzuladen, d.h. das Glas 16 wird abgedunkelt. Nach einer bestimmten, durch die Software vorgegebenen Zeitdauer (z. B. einige Sekunden), wird der Ladevorgang kurz unterbrochen und somit die Spannung an dem Glas 16 gemessen. Ist die Spannung noch zu niedrig, so wird ein weiterer Ladezyklus durchgeführt. Ist hingegen die Spannung zu hoch, so wird ein Entladezyklus erfolgen. Auf diese Art und Weise wird die Spannung in einem definierten Rahmen konstant gehalten, bis der Benutzer das Potentiometer der Sollwertvorgabe 12 und damit die Regler-Führungsgröße wieder verstellt. Durch das erfindungsgemäße Verfahren läßt sich die Durchlässigkeit des elektrochromen Glases 16 am schnellsten verändern, wobei in vorteilhafter Weise die elektrische Spezifikation des Glases einhaltbar ist.

### Bezugszeichenliste

- 1: herkömmliche Glasscheibe
- 2: herkömmliche Glasscheibe
- 3: transparente Elektrode
- 4: transparente Elektrode
- 5: färbende Schicht
- 6: Elektrolyt
- 7: Ionenspeicherschicht
- 10: Rechner / Mikroprozessor
- 11: Analog/Digital-Wandler
- 12: Sollwertvorgabe
- 13: Digital/Analog-Wandler
- 14: Leistungs-Spannungsfolger
- 15: Umpoleinrichtung
- 16: elektrochromes Glas
- 17: Analog/Digital-Wandler
- 18: diskreter Ausgang
- OP: Operationsverstärker
- D1: Diode
- K1: Relais
- R2: Strombegrenzungswiderstand
- T1: MOSFET
- T2: MOSFET

## Patentansprüche

1. Verfahren zur Regelung der Lichtdurchlässigkeit eines elektrochromen Glases, insbesondere für Cockpit- oder Kabinenscheiben eines Flugzeuges, Sonnendächer bzw. Rundumverglasungen eines Autos oder dergleichen, unter Verwendung einer Schaltungsanordnung zur Erzeugung einer, in Abhängigkeit von der gewünschten Lichtdurchlässigkeit an das elektrochrome Glas anzulegenden elektrischen Spannung für eine vorgegebene Zeitdauer und zur Regelung des in das elektrochrome Glas fließenden Stromes, wobei ein Spannungs-Sollwert ermittelt wird, der durch die gewünschte Lichtdurchlässigkeit vorgegeben ist, gekennzeichnet durch folgende Verfahrensschritte:
- der an dem Glas anliegende Spannungs-Istwert wird meßtechnisch ermittelt und mit dem Spannungs-Sollwert verglichen,
- in Abhängigkeit von einem durch den Spannungsvergleich ermittelten Differenzwert wird eine elektrische Spannung positiver oder negativer Polarität zur Erzeugung des Regelstromes an das elektrochrome Glas angelegt, bis der Spannungs-Sollwert erreicht ist,
- nach Erreichung des Spannungs-Sollwertes wird die an das Glas angelegte elektrische Spannung abgeschaltet bzw. derart verringert, daß kein Regelungsstrom fließt, und
- nach jeder Abweichung des an dem Glas anliegenden Spannungs-Istwertes von einem vorgegebenen Schwellwert wird die elektrische Spannung jeweils erneut mit der entsprechenden Polarität an das Glas bis zum Erreichen des Spannungs-Sollwertes angelegt.

2. Verfahren nach Anspruch 1, dadurch gekennzeichnet, daß Regelungsparameter wie Meßintervalle, Spannungsladezeitdauer und/oder Spannungs-Sollwerte während der Regelungsvorgänge variierbar sind.

3. Verfahren nach Anspruch 1 oder 2, dadurch gekennzeichnet, daß die Regelung mit diskreten elektronischen Komponenten über Schwellwertabfragen und Komparatoren durchgeführt wird.

4. Verfahren nach Anspruch 1 oder 2, dadurch gekennzeichnet, daß die Regelung mit einem, ein Analog-Digital-gewandeltes-Signal verarbeitenden Mikrocontroller / Mikroprozessor durchgeführt wird.

5. Schaltungsanordnung zur Durchführung des Verfahrens nach einem der Ansprüche 1 bis 4, dadurch gekennzeichnet, daß an einen Eingang eines Mikroprozessors oder Rechners (10) über einen Analog/Digital-Wandler (11) eine Einrichtung zur Sollwertvorgabe (12) angeschlossen ist, daß an einen Ausgang des Mikroprozessors oder Rechners (10) über einen Digital/Analog-Wandler (13) ein Leistungs-Spannungsfolger (14) als präzise geregelte Spannungsquelle und eine Umpoleinrichtung (15), deren Ausgang mit dem Eingang eines elektrochromen Glases (16) elektrisch leitend verbunden ist, angeschlossen sind, und daß die Umpoleinrichtung (15) und damit das elektrochromen Glases (16) über einen Analog/Digital-Wandler (17) an einen Eingang des Mikroprozessors oder Rechners (10) angeschloßen ist.

6. Schaltungsanordnung nach Anspruch 5, dadurch gekennzeichnet, daß der Leistungs-Spannungsfolger (14) einen Operationsverstärker (OP), einen MOSFET (T1) und einen Strombegrenzungswiderstand (R2) aufweist.

7. Schaltungsanordnung nach Anspruch 5, dadurch gekennzeichnet, daß die Umpoleinrichtung (15) aus einem Relais (K1), einem MOSFET (T2) und einer Diode (D1) besteht.

8. Schaltungsanordnung nach Anspruch 7, dadurch gekennzeichnet, daß der MOSFET (T2) mit einem diskreten Ausgang (18) in elektrisch leitender Verbindung steht.
